# FASCICULE DE BREVET EUROPEEN

(11) **EP 2 289 654 B1**
(45) Date de publication et mention de la délivrance du brevet: **30.11.2011**
(21) Numéro de dépôt: 09168856.4
(22) Date de dépôt: 27.08.2009
(51) Int. Cl.: B23B 9/00, B23Q 16/02, B23Q 39/04

(54) **Dispositif d'indexation et d'entraînement des broches d'un tour multibroches**
Indexierungs- und Antriebsvorrichtung für die Spindeln einer Mehrspindel-Drehmaschine
Device for indexing and driving the spindles in a multiple-spindle lathe

(43) Date de publication de la demande: 02.03.2011
(73) Titulaire: Durandard, Alain, 74800 Saint Pierre en Faucigny (FR)
(72) Inventeur: Durandard, Alain, 74800 Saint Pierre en Faucigny (FR)
(74) Mandataire: Bugnion Genève

(56) Documents cités:
- DE-U1- 9 419 858
- US-A- 2 912 892
- US-A- 5 016 334

## Description

L'invention concerne le domaine des tours multibroches. L'invention porte en particulier sur un dispositif d'indexation et d'entrainement des broches d'un tour multibroches comprenant une pluralité de broches montées au sein d'un tambour porte-broches rotatif selon le préambule de la revendication 1. Un tel dispositif est décrit dans le document us 5016334 A. Elle concerne encore un tour multibroches muni d'un tel dispositif d'indexation et d'entrainement des broches selon la revendication 10 ainsi qu'un procédé de rénovation d'un tour multibroches existant/ selon le préambule de la revendication 11. Un tel procédé est décrit dans le document US 2 912 892 A.

Les tours multibroches sont des machines communément utilisées pour l'usinage ou le décolletage de barres de matière. Ces machines comportent en général un arbre central d'entraînement et deux parties fonctionnelles, une première partie permettant l'alimentation, le maintien et l'entraînement des barres de matière et une deuxième partie permettant l'entraînement et l'indexation des broches. La première partie est pourvue d'une pluralité de broches dans lesquelles sont respectivement introduites les barres de matière qui, grâce à des moyens d'entraînement, peuvent coulisser à l'intérieur des broches jusqu'à venir déborder à l'extrémité de celles-ci. La deuxième partie comprend en général un dispositif d'entraînement et d'indexation des broches qui comprend un tambour porte-broches rotatif au sein duquel sont montées les broches et qui permet, d'une part d'entraîner les broches en rotation autour de leurs axes respectifs et, d'autre part, de faire passer les broches d'une station de travail à l'autre en faisant tourner le tambour porte-broches autour de l'arbre central. Les broches sont entraînées en rotation grâce à des moyens mécaniques tels que des engrenages, des courroies, des pignons, directement ou indirectement entraînés par l'arbre central. L'extrémité des barres de matière fait face à un chariot porte-outils comprenant généralement des outils de coupe, de taraudage, de fraisage ou de perçage qui permettent d'effectuer les travaux d'usinage nécessaires sur l'extrémité saillante des barres lorsque celles-ci sont mises en rotation. A chaque fraction de tour du tambour porte-broches, les extrémités des barres de matière à usiner viennent en face des outils appropriés et elles subissent des étapes de transformation successives. Lorsqu'une barre de matière a subi toutes les transformations nécessaires en prenant place dans chacune des stations de travail, l'usinage de la barre de matière est terminé et une pièce finie est produite.

Les tours multibroches comportent donc en général un arbre central qui permet, d'une part, l'entrainement simultané de toutes les broches grâce à des moyens mécaniques de liaison et qui, d'autre part, sert également à faire tourner le tambour porte-broches, faisant passer les broches d'une station de travail à l'autre.

Ce type de construction des tours multibroches classiques présente toutefois un inconvénient majeur en ce qui concerne la vitesse de rotation des broches.

En effet, le rendement de production est directement lié à la vitesse de rotation des broches car celle-ci est un paramètre déterminant du temps nécessaire pour produire une pièce finie. En effet, une broche qui tourne vite permet d'effectuer une opération d'usinage sur une barre plus rapidement qu'une broche qui tourne lentement. Or, la vitesse de rotation qu'il est possible d'utiliser dépend du diamètre de la barre à usiner. Plus le diamètre de la barre est petit, plus la vitesse de rotation qu'il est possible d'utiliser est élevée. Or, lors des étapes successives d'usinage d'une barre de matière, le diamètre de la barre de matière diminue d'une station de travail à l'autre, et il serait donc souhaitable d'augmenter la vitesse de rotation des broches lorsque, suite aux opérations d'usinage, le diamètre de la barre diminue. Il serait ainsi possible, en augmentant la vitesse de rotation des broches correspondant aux stations de travail où le diamètre des barres est plus petit, de diminuer le temps de passage pour certaines stations de travail, donc globalement de diminuer le temps de production et donc d'augmenter le rendement.

Cependant, comme cela est dit ci-dessus, les tours multibroches classiques comportent en général un seul arbre central qui entraîne simultanément toutes les broches à la même vitesse. En conséquence, lorsque l'on veut usiner les barres dont le diamètre change au gré des opérations d'usinage, il est obligatoire de limiter la vitesse de rotation des broches à la vitesse la plus faible, celle qui est requise pour la station de travail où le diamètre de la barre est le plus grand. Autrement dit, le rendement de production est donc limité par la vitesse de rotation la plus lente puisque toutes les broches des tours multibroches classiques sont entraînées simultanément à la même vitesse au moyen d'un arbre central unique.

Afin d'augmenter le rendement, il serait donc souhaitable de pouvoir faire tourner les broches correspondant aux stations de travail où le diamètre des barres est plus petit à des vitesses plus élevées que celles correspondant aux stations de travail où les barres ont un diamètre plus important. A cette fin, les constructeurs de tours multibroches ont cherché depuis longtemps à trouver une solution permettant de faire tourner les broches indépendamment les unes des autres à des vitesses différentes.

La demande de brevet européen EP 0 113 997 décrit un tour multibroches à quatre broches dans lequel quatre moteurs indépendants logés dans un caisson distant du tambour porte-broches servent à l'entraînement de chacune des broches. Plusieurs dispositifs d'entraînement indépendants, comprenant en particulier quatre axes coaxiaux logés les uns à l'intérieur des autres, permettent d'entraîner indépendamment les broches à des vitesses différentes. Le système présenté est toutefois limité à un tour à quatre broches par la complexité et le dimensionnement des dispositifs d'entraînement indépendants : ce système n'est pas adaptable pour un tour à six broches. De plus, la complexité des dispositifs d'entraînement est telle qu'il serait impossible d'implanter un tel mécanisme sur un tour existant.

Le brevet américain US 3,339,440 décrit un tour à six broches dans lequel six moteurs indépendants montés au sein du tambour porte-broche permettent l'entraînement des broches à des vitesses différentes. Toutefois, chaque moteur est relié à une broche au moyen d'une courroie d'entraînement et, lors du passage d'une station de travail à une autre station de travail, c'est tout l'ensemble broches-moteurs qui tourne. Le poids de l'ensemble des moteurs-broches qui tourne à chaque changement de station limite la vitesse de rotation du tambour porte-broches, induit un manque de précision de l'indexation et induit également une usure plus rapide des pièces nécessaires à la rotation de l'ensemble. Par ailleurs, selon ce document, l'utilisation d'un ensemble d'engrenages est fortement déconseillée car elle est la cause d'une plus grande pollution sonore.

Le brevet américain US 4,640,158 décrit un tour multibroches dans lequel des moteurs électriques indépendants assurent l'entraînement indépendant des broches à des vitesses différentes. Cette construction est cependant extrêmement couteuse et souffre d'un handicap majeur qui est lié au rendement de production. En effet, compte tenu des connections électriques nécessaires à l'alimentation des moteurs électriques, il est nécessaire, une fois que toutes les stations de travail ont été successivement occupées par les broches, d'effectuer un mouvement de rotation inverse du tambour porte-broches afin de dérouler les fils électriques nécessaires à l'alimentation en courant de chacun des moteurs. Ce mouvement de rotation inverse induit une perte de temps et nuit au rendement de production. Par ailleurs, la complexité du système lié à l'alimentation des moteurs est telle qu'il serait fastidieux d'adapter un tel dispositif sur un tour existant. Enfin, les broches font parties intégrantes des moteurs électriques et il serait nécessaire de changer non seulement les moteurs mais aussi tout le système d'entraînement des barres de matière, ce qui constitue une opération très coûteuse.

Un autre problème qui se pose dans le domaine des tours multibroches concerne l'adaptation et la modernisation de tours multibroches existants. En effet, un tour multibroches est une machine très couteuse et il est parfois plus intéressant financièrement et techniquement d'adapter un tour multibroches existant plutôt que d'en acquérir un nouveau. Les tours multibroches sont en effet des machines robustes qui ont généralement une durée de vie qui se compte en dizaine d'années : il est courant de trouver des tours multibroches, toujours en utilisation, dont l'âge dépasse une vingtaine, voire une trentaine, d'années. Il est donc souhaitable également de pouvoir adapter ces tours multibroches existants en vue d'en augmenter le rendement. Cependant, comme cela a été dit plus haut, les tours existants fonctionnent généralement avec un arbre central unique entraînant toutes les broches à la même vitesse et, afin qu'il soit possible de faire tourner les broches indépendamment à des vitesses différentes, il est alors nécessaire d'adapter le dispositif d'indexation et d'entraînement des broches.

Cependant, un tel processus de rénovation d'un tour existant est limité par des contraintes liées à l'espace disponible à l'intérieur du bâti existant. En effet, les parties fonctionnelles d'un tour sont généralement logées dans un bâti et l'espace libre à l'intérieur du bâti est en général très limité. Ainsi, lors de l'adaptation d'un tour multibroches existant, il est nécessaire de pouvoir adapter le nouveau système d'indexation et d'entraînement au sein de l'espace limité du bâti du tour. Ce problème se pose en particulier lorsque, pour palier au problème d'entraînement unique, on désire adapter le dispositif d'entraînement et d'indexation en y ajoutant des éléments mécaniques. Les contraintes liées à l'espace disponible à l'intérieur du bâti imposent que le nouveau dispositif d'entraînement et d'indexation puisse être contenu dans l'espace limité du bâti.

Le premier but de l'invention est donc de fournir un dispositif d'indexation et d'entraînement des broches d'un tour multibroches permettant de faire tourner les broches indépendamment à des vitesses différentes. Un deuxième but de l'invention est de proposer un tel dispositif d'indexation et d'entraînement des broches d'un tour multibroche qui soit adaptable dans un tour multibroches existant.

Le dispositif d'indexation et d'entraînement des broches d'un tour multibroches comprenant une pluralité de broches montées au sein d'un tambour porte-broches rotatif selon l'invention comprend un ensemble de pignons de broche, chacun desdits pignons de broche étant lié cinématiquement en rotation à une desdites broches, des moyens de rotation destinés à faire tourner ledit tambour porte-broches de manière à faire passer les broches d'une station de travail à une autre, une pluralité de moteurs électriques comprenant chacun un pignon de sortie lié cinématiquement en rotation à un pignon de broche au moyen d'un ensemble de pignons intermédiaires, des moyens d'indexation destinés à indexer les pignons de broche en face desdits pignons intermédiaires et une plaque d'appui fixe, les moyens d'indexation comprenant une roue dentée intérieurement fixée sur ladite plaque d'appui et à l'intérieur de laquelle les pignons de broche roulent lorsque les broches passent d'une station de travail à une autre station de travail, ladite roue dentée comportant une pluralité d'espaces libres aptes à recevoir chacun un pignon de broche lorsque les pignons de broches sont en prise avec les pignons intermédiaires.

Selon l'invention, chaque broche peut être entraînée indépendamment à des vitesses variables en mettant en oeuvre une pluralité de moteurs à vitesse variable.

Selon un mode d'exécution de l'invention, chacun desdits pignons de sortie peut être lié cinématiquement en rotation à l'un desdits pignons intermédiaires au moyen d'une courroie d'entraînement.

Selon un mode d'exécution de l'invention, la courroie d'entraînement peut être une courroie crantée.

Selon un mode d'exécution de l'invention, lesdits pignons intermédiaires peuvent être montés sur la plaque d'appui et ils peuvent rester fixes sur la plaque d'appui pendant que les broches passent d'une station de travail à l'autre.

Selon un mode d'exécution de l'invention, les.moyens de rotation peuvent comprendre un dispositif à croix de malte.

Selon un mode d'exécution de l'invention, le tambour porte-broches rotatif peut être entraîné par un moteur indépendant des moteurs entraînant les broches.

Selon un mode d'exécution de l'invention, au sein du tambour porte-broches peuvent être montées six broches.

Selon un mode d'exécution de l'invention, au sein du tambour porte-broches peuvent être montées huit broches.

Un tour multibroches selon l'invention comprend un dispositif d'indexation et d'entraînement tel que défini ci-dessus.

Selon l'invention, le procédé de rénovation d'un tour multibroches comprend une étape consistant à adapter dans ledit tour un dispositif d'indexation et d'entraînement tel que décrit ci-dessus.

L'invention sera mieux comprise par l'homme du métier grâce à la description détaillée d'un mode d'exécution en relation avec les dessins accompagnants, dans lesquels :
La figure 1 montre une vue de face du dispositif d'indexation et d'entraînement selon l'invention.
La figure 2 montre une vue partielle en coupe du dispositif d'indexation et d'entrainement selon l'invention.

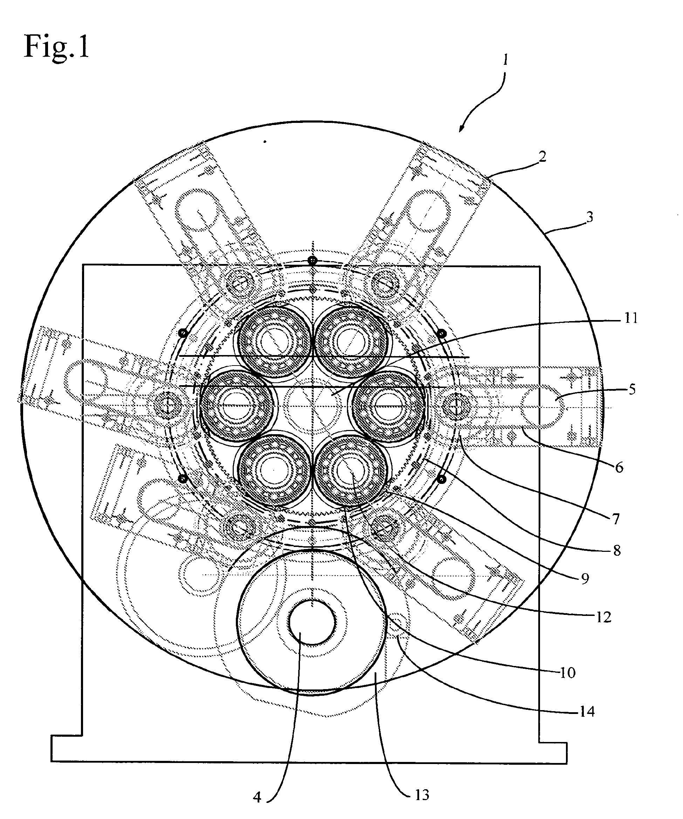

Le dispositif 1 d'entraînement et d'indexation des broches d'un tour multibroches représenté à la figure 1 comprend une pluralité de moteurs électriques 2 indépendants montés sur une plaque d'appui 3. Le tour multibroches comprend une pluralité de broches montées au sein d'un tambour porte-broches rotatif (dont seul l'axe 11 est représenté) et un arbre central 4 rotatif permettant, comme cela sera décrit plus en détail dans la suite, de faire tourner le tambour porte-broches afin de faire passer les broches d'une station de travail à l'autre. Dans le mode d'exécution décrit ici, le tour multibroches comprend six broches montées au sein du tambour porte-broches mais le dispositif peut également être adapté dans un tour à quatre ou huit broches.

Chacun des moteurs électriques 2 est commandé indépendamment par un dispositif à commande numérique du tour (non représenté) bien connu de l'homme du métier. Ce dispositif de commande permet la gestion et le contrôle de la vitesse de rotation et de l'orientation de l'arbre de sortie de chacun des moteurs électriques 2. Le dispositif à commande numérique gouverne également le dispositif d'entraînement des barres de matière, il commande les mouvements du chariot porte-outils du tour (non représenté) ainsi que la vitesse de rotation de l'arbre central 4.

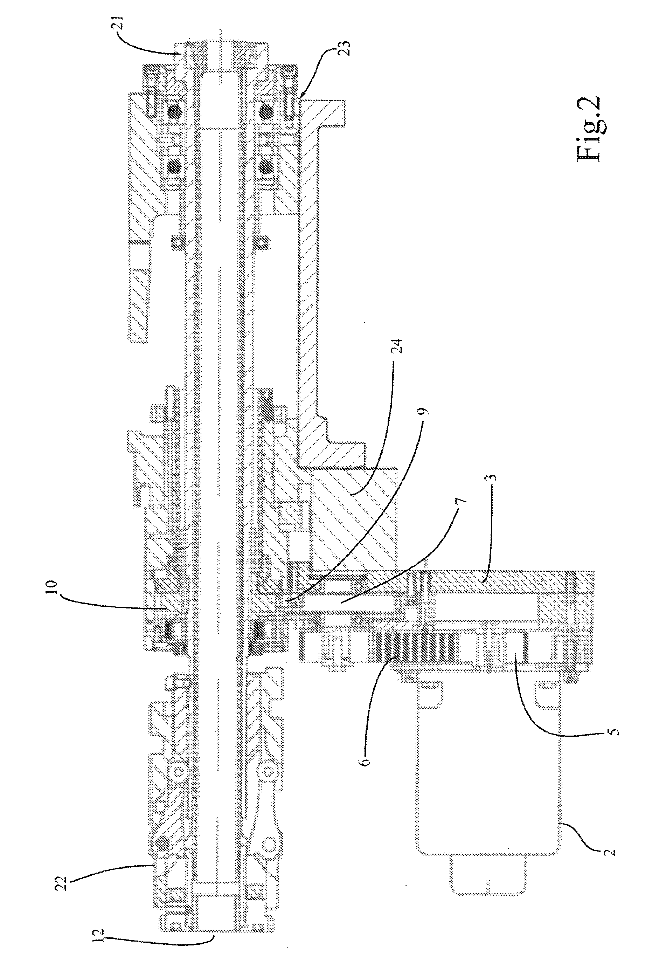

Chacun des moteurs électriques 2 comprend un pignon de sortie 5 lié cinématiquement en rotation, au moyen d'une courroie d'entraînement 6, de préférence crantée, à un pignon arbré, dit pignon intermédiaire 7. Chaque broche 21 est liée cinématiquement en rotation à un pignon de broche 10, comme représentée sur la figure 2. Sur la plaque d'appui 3 est montée une roue 8 dentée intérieurement, mais dont les zones dentées sont entrecoupées d'une pluralité d'espaces libres de dents 9 permettant, lorsque les broches occupent leurs stations de travail respectives, que les dents des pignons intermédiaires 7 engrènent directement avec celles des pignons de broches 10. Les pignons de broches 10 et leurs broches respectives sont montées au sein du tambour porte-broche rotatif qui effectue, de manière séquentielle, des rotations autour de l'axe central du tambour 11, ce qui permet de faire passer les broches d'une station de travail à l'autre. Les barres de matière à usiner sont introduites dans les tubes 12 et coulissent jusqu'à venir faire saillie à l'extrémité des broches de façon à pouvoir être usinées, en occupant les stations de travail successives, par les outils montés sur le chariot porte-outils.

Le tambour porte broches est entraîné en rotation au moyen d'un dispositif à croix de malte bien connu de l'homme du métier dont seulement une partie, une roue 13 munie d'un galet 14, est représentée sur la figure 1.

Le dispositif à croix de malte entraîne le tambour porte-broches, de façon séquentielle, lors de l'introduction du galet 14 dans l'une des gorges d'une roue dentée qui, à son tour, entraîne le tambour porte-broches en rotation au moyen d'un engrenage usiné sur ce dernier. Dans le cas ou le tour multibroches comporte six broches, les gorges de la roue dentée du dispositif à croix de malte sont usinées de telle façon à ce que le tambour porte-broches effectue de manière séquentielle une rotation d'un angle de soixante degrés autour de l'axe 11. L'angle de rotation ainsi que la configuration du dispositif à croix de malte dépend évidemment du nombre de broches présentes dans le tour. Ainsi pour un tour à quatre broches, le tambour porte-broches effectue, de manière séquentielle, une rotation d'un angle de quatre vingt dix degrés, pour un tour à huit broches, il effectue, de manière séquentielle, une rotation d'un angle de quarante cinq degrés, etc.

Le passage des broches d'une station de travail à une autre se fait donc au moyen du dispositif à croix de malte lorsque ce dernier fait tourner le tambour porte-broches. Chacun des pignons de broche 10 quitte alors l'espace libre 9 dans lequel il se trouve et roule à l'intérieur de la roue dentée 8, en engrenant avec celle-ci, pour venir s'indexer, dans l'espace libre suivant, en face du pignon intermédiaire 7 suivant, passant ainsi d'une station de travail à la suivante. Lorsqu'une rotation du tambour porte-broches est effectuée, chacun des pignons de broches 10 se trouve donc de nouveau dans l'un des espaces libres 9 de la roue dentée et vient donc engrener avec un pignon intermédiaire 7. Le dimensionnement et le nombre des dents des pignons de broche 10 et de la roue dentée 8 est prévu de sorte que, en fonction de l'angle de rotation effectué par le tambour porte-broches à chaque changement de station de travail, les pignons de broches 10 puissent rouler à l'intérieur de la roue dentée 8 et venir s'indexer parfaitement avec les pignons intermédiaires 7 dans les espaces libres 9. Les dents des pignons intermédiaires et de la roue dentée peuvent à cet effet être usinées de façon oblique de façon à ce que, lors du passage d'une station de travail à une autre, le risque de voir les dents de la roue dentée 8 se trouver en face de celles des pignons de broches 10 soit extrêmement limité, voire nul.

Comme cela a été décrit précédemment, lors du passage d'une station de travail à l'autre, les pignons de broches 10 roulent donc à l'intérieur de la roue dentée 8. Les pignons intermédiaires 7 ainsi que les moteurs électriques 2 restent quant à eux fixes sur la plaque d'appui 3 qui ne bouge pas. Le poids des éléments mis en rotation lors du passage d'une station de travail à l'autre est donc limité, car seul le tambour porte-broches tourne. Il devient donc possible ainsi de faire tourner le tambour porte-broches plus rapidement, d'une position d'indexation à l'autre, ce qui augmente d'autant plus le rendement du tour. La précision de l'indexation des pignons de broches 10 en face des pignons intermédiaire 7, grâce à la roue dentée 8, est assurée par le dimensionnement adéquat des dents des pignons de broche 10 et de la roue denté 8 qui sont usinées de façon à ce que chacune des dents des pignons de broche 10 coopère parfaitement avec les dents de la roue dentée 8 tout au long du trajet suivi pour passer d'une station de travail à l'autre.

Comme cela a été dit précédemment, chacun des moteurs électriques 2 est commandé indépendamment : ces derniers peuvent donc tourner, en fonction des ordres qu'ils reçoivent de la commande numérique, à des vitesses différentes. En conséquence, les pignons intermédiaires 7 qui sont liés aux pignons de sortie 5 des moteurs au moyen des courroies d'entraînement 6 peuvent donc également évoluer à des vitesses différentes, ce qui permet de faire tourner chacune des broches à des vitesses différentes et permet ainsi d'augmenter le rendement du tour.

La figure 2 représente une vue partielle en coupe d'une partie du dispositif d'indexation et d'entraînement des broches d'un tour multibroches selon l'invention. Pour plus de clarté, la figure 2 représente uniquement une partie du dispositif relative à une broche mais il est clair que le dispositif est le même et se répète pour chacune des broches du tour, comme on peut le voir sur la figure 1.

Une barre de matière est insérée dans le tube 12 et coulisse, au moyen d'un dispositif d'entraînement 22 bien connu de l'homme du métier, jusqu'à venir faire saillie à l'extrémité de la broche 21 afin d'être usiné par les outils du chariot porte-outils (non représentés). La broche 21 est montée au sein du tambour porte-broches 23 qui comprend, comme cela est bien connu de l'homme du métier, différents éléments mécaniques tels que des roulements, des vis, des écrous de serrage, des entretoises, etc.

Comme cela a été décrit précédemment, lors du passage d'une station de travail à l'autre, chacun des pignons de broche 10 roule dans la roue dentée 8 pour rejoindre l'un des espaces libre de celle-ci. La figure 2 représente l'une des broches 21 lorsque son pignon de broche 10 est indexé dans l'une des stations de travail et ce dernier est donc en prise avec le pignon intermédiaire 7 correspondant. Lors de la rotation précédente du tambour porte-broches, le pignon de broche a donc roulé à l'intérieur de la roue dentée 8 jusqu'à venir s'indexer dans l'un des espaces vides 9 de celle-ci. Toute rotation du pignon de sortie 5 du moteur électrique 2 est donc transmise, par l'intermédiaire de la courroie d'entraînement 6, au pignon intermédiaire 7 qui, à son tour, entraîne en rotation le pignon de broche 10.

Lors de la prochaine rotation du tambour porte-broches, effectuée au moyen du dispositif à croix de malte comme cela a été décrit précédemment, le pignon de broche 10 quitte sa position d'indexation et roule dans la roue dentée 8 pour rejoindre la station de travail suivante et venir engrener, dans l'espace libre 9 suivant de la roue dentée 8, avec le pignon intermédiaire 10 qui correspond à la station de travail suivante. Le processus est répété jusqu'à ce que chacune des broches ait occupé toutes les stations de travail. A la fin du processus, lorsque chaque broche a effectivement occupé toutes les stations de travail, l'extrémité usinée de la barre de matière est découpée et une pièce finie est produite.

Grâce à l'invention, il devient donc possible de faire tourner chacune des broches indépendamment des autres à une vitesse qui lui est propre et qui peut être différente de la vitesse de rotation des autres broches et ceci grâce au fait que chacun des moteurs électriques 2 peut effectivement être commandé pour tourner à une vitesse qui lui est propre. Il devient ainsi possible d'augmenter le rendement du tour en programmant la commande numérique pour que chacune des broches évolue, en fonction de la station de travail dans laquelle elle se trouve, à la vitesse maximale qui est supporté par le diamètre de la barre de matière. Ainsi, au gré des stations de travail occupées par les broches, il est possible de faire tourner les broches plus rapidement lorsque le diamètre de la barre de matière diminue. La vitesse de rotation des différentes broches n'est donc plus limitée à la vitesse de la broche la plus lente, celle qui est requise lorsque le diamètre de la barre de matière est le plus grand. En conséquence, il devient donc également possible, grâce à l'invention, d'usiner des barres de plus gros diamètre.

Le dispositif d'indexation et d'entraînement selon l'invention permet également d'augmenter la vitesse d'indexation du tambour porte-broches, ce qui contribue d'autant plus à augmenter le rendement du tour.

Par ailleurs, il est possible de programmer la commande numérique, grâce à la connaissance du trajet suivi par les broches lorsque ces dernières passent d'une station de travail à l'autre, de façon à connaître en permanence l'orientation des broches, ce qui permet d'effectuer sur les barres de matière également des travaux de perçage, de taraudage, etc.

Le dispositif d'indexation et d'entraînement selon l'invention, grâce à sa complexité mécanique modérée et grâce à son faible encombrement, permet également de rénover à moindre coût les tours multibroches existants en montant ledit dispositif au sein d'un bâti existant. Il est en effet tout à fait possible d'adapter le dispositif selon l'invention au sein d'un bâti puisque, de part son dimensionnement, ce dernier peut sans aucun problème prendre place dans un espace limité. Contrairement aux dispositifs de l'art antérieur, l'adaptation du dispositif d'indexation et d'entraînement selon l'invention ne nécessite pas de changer le dispositif permettant l'entraînement des barres de matière. Lors d'une telle adaptation, il convient simplement, le cas échéant, de dimensionner la roue dentée 8 en accord avec le tambour porte-broches existant et selon le dispositif permettant la rotation de ce dernier. Finalement, il suffit de monter la plaque d'appui 3 et de fixer sur celle-ci les différents pignons et les moteurs électriques. Pour les besoins d'une telle adaptation, la plaque d'appui 3 pourra éventuellement être complétée par une bague d'espacement 24 en vue de fournir l'espace nécessaire pour loger une partie du mécanisme d'entraînement du tambour. L'homme du métier comprendra aisément comment implanter le dispositif d'indexation et d'entraînement des broches selon l'invention au sein du bâti d'un tour existant.

Le dispositif d'indexation et d'entraînement selon l'invention peut convenir et être adapté sur un tour à quatre, six ou huit broches.

L'invention permet donc d'augmenter le rendement d'un tour et permet également de rénover, aisément et à moindre coût, un tour multibroches existant.

L'invention permet également de fournir un tour multibroches dont la réparation et l'entretien sont facilités par la faible complexité mécanique du dispositif.

## Revendications

1. Dispositif d'indexation et d'entrainement des broches d'un tour multibroches comprenant une pluralité de broches (21) montées au sein d'un tambour porte-broches rotatif ledit dispositif comprenant :
- un ensemble de pignons de broche (10), chacun desdits pignons de broche étant lié cinématiquement en rotation à une desdites broches,
- des moyens de rotation (4, 13, 14) destinés à faire tourner ledit tambour porte-broches de manière à faire passer les broches d'une station de travail à une autre,
- une pluralité de moteurs électriques (2) comprenant chacun un pignon de sortie (5) lié cinématiquement en rotation à un pignon de broche (10) au moyen d'un ensemble de pignons intermédiaires (7),
- des moyens d'indexation destinés à indexer les pignons de broche en face desdits pignons intermédiaires,
**caractérisé en ce que**
ledit dispositif comprend une plaque d'appui fixe (3), que les moyens d'indexation comprennent une roue dentée intérieurement (8), fixée sur ladite plaque d'appui et à l'intérieur de laquelle les pignons de broche (10) roulent lorsque les broches passent d'une station de travail à une autre station de travail, ladite roue dentée comportant une pluralité d'espaces libres (9) aptes à recevoir chacun un dit pignon de broche lorsque lesdits pignons de broches (10) sont en prise avec lesdits pignons intermédiaires (7).

2. Dispositif selon la revendication 1, **caractérisé en ce que** chaque broche est entraînée indépendamment à des vitesses variables en mettant en oeuvre une pluralité de moteurs à vitesse variable.

3. Dispositif selon l'une des revendications 1 ou 2, **caractérisé en ce que** chacun desdits pignons de sortie (5) est lié cinématiquement en rotation avec l'un desdits pignons intermédiaires (7) au moyen d'une courroie d'entraînement (6).

4. Dispositif selon l'une des revendications précédentes, **caractérisé en ce que** la courroie d'entraînement (6) est une courroie crantée.

5. Dispositif selon l'une des revendications précédentes, **caractérisé en ce que** lesdits pignons intermédiaires (7) sont montés sur la plaque d'appui (3) et **en ce que** lesdits pignons intermédiaires restent fixes sur la plaque d'appui pendant que les broches passent d'une station de travail à l'autre.

6. Dispositif selon l'une des revendications précédentes, **caractérisé en ce que** les dits moyens de rotation comprennent un dispositif à croix de malte.

7. Dispositif selon l'une des revendications précédentes, **caractérisé en ce que** le tambour porte-broches rotatif est entraîné par un moteur indépendant des moteurs (2) entraînant les broches.

8. Dispositif selon l'une des revendications précédentes, **caractérisé en ce qu'**au sein du tambour porte-broches sont montées six broches (21).

9. Dispositif selon l'une des revendications 1-7, **caractérisé en ce qu'**au sein du tambour porte-broches sont montées huit broches.

10. Tour multibroches comprenant un dispositif d'indexation et d'entraînement selon l'une des revendications précédentes.

11. Procédé de rénovation d'un tour multibroches **caractérisé en ce qu'**il comprend une étape consistant à adapter dans ledit tour un dispositif d'indexation et d'entraînement selon l'une des revendications 1 à 9.

## Claims

1. Device for indexing and driving the spindles of a multiple-spindle lathe, including a plurality of spindles (21) mounted in a rotary spindle-supporting drum, said device comprising:
- a group of spindle pinions (10), each of said spindle pinions being kinetically coupled for rotation to one of said spindles,
- rotary means (4, 13, 14) for rotating said spindle supporting drum in such a manner that the spindles go from one working station to another,
- a plurality of electric motors (2) each comprising an output pinion (5) being kinetically coupled for rotation to a spindle pinion (10) by means of a group of intermediate pinions (7),
- indexing means for indexing the spindle pinions facing said intermediate pinions,
**characterised in**
**that** said device comprises a fixed supporting plate (3), that the indexing means include an inner toothed wheel (8) fastened on said supporting plate and inside which said spindle pinions (10) roll along when the spindles are passing from one working station to another working station, said toothed wheel having a plurality of free spaces (9) each capable of receiving one said spindle pinion when said spindle pinions (10) are meshing with said intermediate pinions (7).

2. Device according to claim 1, **characterised in that** each spindle is independently driven with variable speeds by using a plurality of motors with variable speed.

3. Device according to any one of claims 1 and 2, **characterised in that** each of said output pinions (5) is kinetically coupled for rotation to one of said intermediate pinions (7) by means of a driving belt (6).

4. Device according to any one of the preceding claims, **characterised in that** the driving belt (6) is a toothed belt.

5. Device according to any one of the preceding claims, **characterised in that** said intermediate pinions (7) are mounted on the supporting plate (3), and that said intermediate pinions remain fastened on the supporting plate when the spindles travel from one working station to another.

6. Device according to any one of the preceding claims, **characterised in that** said rotary means comprise a Maltese cross device.

7. Device according to any one of the preceding claims, **characterised in that** the rotary spindle supporting drum is driven by a motor that is independent of the motors (2) which drive the spindles.

8. Device according to any one of the preceding claims, **characterised in that** six spindles (21) are mounted in the spindle supporting drum.

9. Device according to any one of claims 1 to 7, **characterised in that** eight spindles are mounted in the spindle supporting drum.

10. Multiple-spindle lathe, including a device for indexing and driving the spindles according to one of the preceding claims.

11. Method for the renovation of a multiple-spindle lathe, **characterised in that** it comprises a step wherein a device for indexing and driving the spindles according to any one of claims 1 to 9 is adapted to said lathe.

## Patentansprüche

1. Vorrichtung zum Indexieren und Antreiben der Spindeln einer Mehrspindel-Drehmaschine mit mehreren Spindeln (21), welche in einer drehbar angeordneten Spindeltrommel untergebracht sind, wobei die Vorrichtung
- eine Gruppe von Spindelzahnrädern (10), von denen jedes dieser Spindelzahnräder rotativ-kinetisch mit einer der genannten Spindeln verbunden ist,
- Rotationsmittel (4, 13, 14), welche dazu bestimmt sind, die genannte Spindeltrommel so anzutreiben, dass die Spindeln von einer Arbeitsstation zu einer anderen bewegt werden,
- mehrere Elektromotoren (2), von denen jeder ein Abtriebszahnrad (5) aufweist, welches über eine Gruppe von Zwischenrädern (7) rotations-kinetisch mit einem Spindelzahnrad (10) verbunden ist, und
- Mittel zur Indexierung, die zum Indexieren der Spindelzahnräder gegenüber den genannten Zwischenrädern bestimmt sind,
aufweist,
**dadurch gekennzeichnet, dass** die genannte Vorrichtung eine feste Stützplatte (3) aufweist, dass die Indexierungsmittel ein Zahnrad mit Innenverzahnung (8) enthalten, welches auf der genannten Stützplatte befestigt ist und in dessen Inneren die Spindelzahnräder (10) umlaufen, wenn die Spindeln von einer Arbeitsstation in eine andere Arbeitsstation übergehen, wobei das genannte Zahnrad mehrere freie Räume (9) besitzt, von denen jeder ein genanntes Spindelzahnrad aufnehmen kann, wenn diese Spindelzahnräder (10) mit den genannten Zwischenrädern (7) in Eingriff befindlich sind.

2. Vorrichtung nach Anspruch 1, **dadurch gekennzeichnet, dass** jede Spindel unabhängig und mit veränderlichen Geschwindigkeiten angetrieben wird, wozu mehrere Motoren mit variabler Drehzahl eingesetzt werden.

3. Vorrichtung nach einem der Ansprüche 1 und 2, **dadurch gekennzeichnet, dass** jedes genannte Abtriebszahnrad (5) rotations-kinetisch über einen Antriebsriemen (6) mit einem der genannten Zwischenräder (7) verbunden ist.

4. Vorrichtung nach einem der vorstehenden Ansprüche, **dadurch gekennzeichnet, dass** der Antriebsriemen (6) ein Zahnriemen ist.

5. Vorrichtung nach einem der vorstehenden Ansprüche, **dadurch gekennzeichnet, dass** die genannten Zwischenräder (7) auf der Stützplatte (3) angebracht sind, und dass die genannten Zwischenräder unbeweglich auf der Stützplatte sind, wenn die Spindeln von einer Arbeitsstation zu einer anderen übergehen.

6. Vorrichtung nach einem der vorstehenden Ansprüche, **dadurch gekennzeichnet, dass** die genannten Rotationsmittel eine Malteserkreuz-Vorrichtung umfassen.

7. Vorrichtung nach einem der vorstehenden Ansprüche, **dadurch gekennzeichnet, dass** die drehbare Spindeltrommel von einem Motor angetrieben wird, der von den Motoren (2), welche die Spindeln antreiben, unabhängig ist.

8. Vorrichtung nach einem der vorstehenden Ansprüche, **dadurch gekennzeichnet, dass** sich in der Spindeltrommel sechs Spindeln (21) befinden.

9. Vorrichtung nach einem der Ansprüche 1 bis 7, **dadurch gekennzeichnet, dass** in die Spindeltrommel 8 Spindeln eingebaut sind.

10. Mehrspindel-Drehmaschine, welche eine Vorrichtung zum Indexieren und Antreiben nach einem der vorstehenden Ansprüche enthält.

11. Verfahren zur Erneuerung einer Mehrspindel-Drehmaschine, **dadurch gekennzeichnet, dass** es einen Schritt aufweist, der eine Anpassung einer Vorrichtung zum Indexieren und Antreiben nach einem der Ansprüche 1 bis 9 umfasst.
